# EUROPEAN PATENT APPLICATION

(11) **EP 3 949 773 A1**
(43) Date of publication of application: **09.02.2022**
(21) Application number: 20782634.8
(22) Date of filing: 02.04.2020
(51) Int. Cl.: A24F 47/00

(54) **ELECTRIC HEATING SMOKING SYSTEM AND RELEASE CONTROL METHOD FOR VOLATILE COMPOUND**

(30) Priority: 03.04.2019 CN 201910263891; 03.04.2019 CN 201910263795
(71) Applicant: Shenzhen First Union Technology Co., Ltd., Shenzhen, Guangdong 518000 (CN)
(72) Inventor: YAN, Huiyong, Shenzhen, Guangdong 518000 (CN); LI, Yuqin, Shenzhen, Guangdong 518000 (CN); XU, Zhongli, Shenzhen, Guangdong 518000 (CN); LI, Yonghai, Shenzhen, Guangdong 518000 (CN)
(74) Representative: Proi World Intellectual Property GmbH
(86) International application number: PCT/CN2020/082942
(87) International publication number: WO 2020/200271

(57) **Abstract**

A release control method for a volatile compound in an electric heating smoking system, comprising: providing at least one heating element (20) with a constant current as a detection current, and measuring the voltage value on both ends of the heating element (20) under the detection current; and comparing the measured voltage value with a preset voltage threshold and adjusting the electrical energy supplied to the heating element (20) so that the voltage value of the heating element (20) under the detection current is kept below the preset voltage threshold. The control method does not involve the detection and conversion of the temperature during the entire process, but detects the voltage value under the constant current and accordingly adjusts the electrical energy output to the heating element to keep the voltage value below the threshold, achieves good control of the working state of the electric heating smoking system, simplifies the temperature calculation of a controller with limited computing resources, reduces measurement and calculation of a current factor, simplifies the hardware structure, and improves the accuracy of results.

## Description

### CROSS REFERENCE TO RELATED APPLICATIONS

The present application claims priority of Chinese Patent Application No. 201910263891.2, filed in Chinese Patent Office on April 3, 2019 and entitled as "Electric Heating Smoking System and Release Control Method for Volatile Compound", and Chinese Patent Application No. 201910263795.8, filed in Chinese Patent Office on April 3, 2019 and entitled as "Electric Heating Smoking System and Release Control Method for Volatile Compound", the disclosure of which is incorporated by reference herein.

### BACKGROUND OF THE INVENTION

### 1. Field of the Invention

The present invention relates to a technical field of electric heating smoking systems, particularly relates to an electric heating smoking system and a release control method for volatile compounds.

### 2. The Related Arts

An electric heating smoking system is a type of electronic cigarette products and is used to generate inhalable aerosols for smoking by heating volatile compounds. The electric heating smoking system in use usually needs to monitor real-time temperatures of its heating component, and control working powers of the heating component according to the real-time temperatures so as to ensure that the real-time temperatures of the heating component is in a preset range.

At present, for real-time temperature monitoring, two methods are usually used. One is to set up a separate temperature sensor to collect real-time temperature information through the temperature sensor to achieve constant temperature control. The other is a method of resistivity proposed by Philip Morris Products in Chinese Patent Application No. 200980110074.8. In this method, according to real-time resistivity of the heating component in work, real-time temperature information can be derived and obtained to therefore proceed control on the heating component.

In the above two implementations, use of temperature sensors to sense temperatures increases a cost for related hardware of products in view of designed structures and difficulty for assembly of the products. As a result, such use is less to be adopted. Currently, it is common in the art to use change of resistivity for the heating component itself in order to acquire real-time temperatures thereof. In implementation of this method, resistivity monitoring is performed by using a standard voltage divider resistor for detecting. However, during a detecting process, factors of a battery such as an output voltage, a load and an electric current, etc., stay in a varying status. As a result, monitoring becomes more complicated, and accuracy of monitoring results is seriously affected.

### SUMMARY OF THE INVENTION

In order to solve the aforementioned technical problem of sensing and controlling in the electric heating smoking system of existing technology, a release control method for volatile compounds in an electric heating smoking system in accordance with embodiments of the present invention is provided to be performed much more conveniently and precisely.

A release control method for volatile compounds in an electric heating smoking system in accordance with the present invention is provided. The electric heating smoking system includes a power supply, at least a heating element electrically connected with the power supply and used for heating an aerosol generating substrate. The aerosol generating substrate is heated to release a plurality of volatile compounds. The release control method includes the following.

A step of controlling power energy from the power supply supplied to the at least a heating element to avoid at least a volatile compound out of the plurality of volatile compounds being released from the aerosol generating substrate is performed. The controlling steps include the following.

A step of powering the at least a heating element with a constant test electric current is performed.

A step of measuring a voltage value of the at least a heating element under the test electric current is performed.

A step of comparing the measured voltage value with a preset voltage threshold value is performed.

A step of adjusting power energy supplied to the at least a heating element so that the measured voltage value of the at least a heating element under the test electric current is kept less than the preset voltage threshold value is performed.

Preferably, before the step of controlling power energy from the power supply supplied to the at least a heating element to avoid at least a volatile compound out of the plurality of volatile compounds being released from the aerosol generating substrate, the method further includes the following.

A step of predetermining a corresponding voltage threshold value when the at least a heating element works under of a value of the test electric current is performed.

Preferably, the step of predetermining a corresponding voltage threshold value when the at least a heating element works under of a value of the test electric current includes the following.

A step of calculating a resistance value of the at least a heating element corresponding to a preset highest operating temperature value of the at least a heating element based on the preset highest operating temperature value is performed. The preset highest operating temperature value of the at least a heating element is lower than a lowest release temperature of the at least a volatile compound out of the plurality of volatile compounds.

A step of calculating the corresponding voltage threshold value under the value of the test electric current according to the resistance value of the at least a heating element corresponding to the preset highest operating temperature value of the at least a heating element and the value of the test electric current is performed.

Preferably, the step of adjusting power energy supplied to the at least a heating element so that the measured voltage value of the at least a heating element under the test electric current is kept less than the preset voltage threshold value includes the following.

A step of adjusting a duty ratio of the power energy supplied to the at least a heating element so that the measured voltage value of the at least a heating element under the test electric current is lower than the preset voltage threshold value is performed.

Preferably, when the measured voltage value is higher than the preset voltage threshold value, the step of controlling the power supply to cut off power energy of the power supply supplied to the at least a heating element is performed. When the measured voltage value is lower than or equal to the preset voltage threshold value, controlling the power supply to maintain supplying power energy of the power supply to the at least a heating element is performed.

Preferably, the step of adjusting power energy supplied to the at least a heating element so that the measured voltage value of the at least a heating element under the test electric current is kept less than the preset voltage threshold value includes the following.

A step of adjusting an electric voltage value of the power energy supplied to the at least a heating element so that the measured voltage value of the at least a heating element under the test electric current is kept less than the preset voltage threshold value is performed.

Preferably, a step of adjusting an electric voltage value of power energy of the power supply supplied to the at least a heating element so that the measured voltage value of the at least a heating element under the test electric current is kept within a range less than the preset voltage threshold value is performed. The step includes the following.

When the measured voltage value is higher than a highest limit of the range, a step of decreasing an electric voltage of the power energy supplied to the at least a heating element is performed.

When the measured voltage value is lower than a lowest limit of the range, a step of increasing an electric voltage of the power energy supplied to the at least a heating element is performed.

Preferably, a step of controlling the power supply to supply intermittently a constant test electric current to the at least a heating element, and measuring a voltage value of the at least a heating element under the constant test electric current is performed. The controlling step is executed based on a frequency of 100~1000 Hz.

Another release control method for volatile compounds in an electric heating smoking system in accordance with the present invention is further provided. The electric heating smoking system includes a power supply, at least a heating element electrically connected with the power supply and used for heating an aerosol generating substrate. The aerosol generating substrate is heated to release a plurality of volatile compounds. The release control method includes the following.

A step of maintaining a working electric current of the at least a heating element as a constant electric current is performed.

A step of controlling an electric voltage of the power supply supplied to the at least a heating element in order to present at least a volatile compound out of the plurality of volatile compounds from being released from the aerosol generating substrate is performed. The controlling step includes the following.

A step of measuring a working voltage value of the at least a heating element is performed.

A step of comparing the measured working voltage value with a preset voltage threshold value is performed.

A step of adjusting the electric voltage supplied to the at least a heating element so that the measured working voltage of the at least a heating element is kept less than the preset voltage threshold value is performed.

Another release control method for volatile compounds in an electric heating smoking system in accordance with the present invention is further provided. The electric heating smoking system includes a power supply, at least a heating element electrically connected with the power supply and used for heating an aerosol generating substrate. The aerosol generating substrate is heated to release a plurality of volatile compounds. The release control method includes the following.

A step of controlling a power energy of the power supply supplied to the at least a heating element in order to present at least a volatile compound out of the plurality of volatile compounds from being released from the aerosol generating substrate is performed. The controlling step includes the following.

A step of controlling the power supply to supply a constant electric current to the at least a heating element, measuring a voltage value of the at least a heating element under the constant electric current, and comparing the measured voltage value with a preset voltage threshold value in a first time interval is performed.

A step of adjusting power energy of the power supply output to the at least a heating element in a second time interval so that the measured voltage value of the at least a heating element is maintained as being less than the preset voltage threshold value is performed.

The step of controlling in the first time interval and the step of adjusting in the second time interval are alternatively executed base on a preset frequency.

Based on the above methods, an electric heating smoking system in accordance with the present invention is further provided. The electric heating smoking system includes a power supply, at least a heating element electrically connected with the power supply and used for heating an aerosol generating substrate. The aerosol generating substrate is heated to release a plurality of volatile compounds. The electric heating smoking system further includes the following.

A constant electric current test module is used to output a constant electric current to the at least a heating element, and to measure a voltage value between two ends of the at least a heating element under the constant electric current.

A power energy adjusting module is used to adjust power energy of the power supply output to the at least a heating element.

A controller is used to compare the measured voltage value with the preset voltage threshold value. The controller then controls the power energy adjusting module to adjust the power energy of the power supply output to the at least a heating element based on a compared result so that the measured voltage value of the at least a heating element under the constant electric current is maintained as being less than the preset voltage threshold value.

In the above electric heating smoking system and the control method thereof in accordance with the present invention, no detection and sensing of temperatures and conversion and calculation of temperatures are involved in its whole process. Instead, only voltage values under constant electric currents are tested and measured, and an electric energy output to the heating element is correspondingly adjusted to keep the voltage values being as the preset voltage threshold value in order for achieving good control of working states of the electric heating smoke system. As a result, calculation and evaluation of temperatures in the controller with limited computing resources is simplified, and measurement and calculation of factors of electric currents are reduces. Hence, accuracy of results is enhanced while a hardware structure of the electric heating smoking system is simplified.

Based on another control method, another electric heating smoking system in accordance with the present invention is further provided. The electric heating smoking system includes a power supply, at least a heating element electrically connected with the power supply and used for heating an aerosol generating substrate. The aerosol generating substrate is heated to release a plurality of volatile compounds. The electric heating smoking system further includes the following.

A test and measuring module is used to measure a working status of the at least a heating element.

A power energy adjusting module is used to adjust power energy of the power supply output to the at least a heating element.

A controller is used to control the test and measuring module for measuring the working status of the at least a heating element, and to control the power energy adjusting module for adjusting the power energy of the power supply output to the at least a heating element according to the measured working status.

The test and measuring module and the power energy adjusting module are disposed to alternatively work according to a preset frequency.

Preferably, the work status of the at least a heating element includes at least one kind of a working voltage value, a working value of electric currents, a real-time resistance value, a real-time coefficient of resistivity or an operative temperature.

Preferably, the test and measuring module includes a power input end, a signal testing end, a controlled end and a signal output end. The power input end of the test and measuring module is electrically connected with the power supply. The signal testing end of the test and measuring module is electrically connected with the at least a heating element. The controlled end and the signal output end of the test and measuring module are electrically connected with the controller.

The power energy adjusting module includes a power energy input end, a power energy output end and a controlled end. The power energy input end of the power energy adjusting module is electrically connected with the power supply. The power energy output end of the power energy adjusting module is electrically connected with the at least a heating element. The controlled end of the power energy adjusting module is electrically connected with the controller.

Preferably, the electric heating smoking system further includes the following.

A first switch is used to control the controller to supply power to the test and measuring module. The power input end of the test and measuring module is electrically connected with the power supply via the first switch.

Preferably, the power energy adjusting module includes a second switch. One end of the second switch is electrically connected with the power supply, and the other end of the second switch is electrically connected with the at least a heating element. The power energy of the power supply output to the at least a heating element is adjusted by switch-on or switch-off of the second switch. The second switch is disposed to be switched off when the measured voltage value of the two ends of the at least a heating element is higher than the preset voltage threshold value.

Preferably, the first switch and the second switch are disposed to be alternatively electrically conducted according to the preset frequency so that the test and measuring module and the power energy adjusting module are disposed to alternatively work according to the preset frequency.

Preferably, the test and measuring module includes the following.

A constant electric current converting unit is used to convert output voltages of the power supply to a constant electric current which is subsequently output to the at least a heating element.

A voltage test unit is used to measure a voltage value between two ends of the at least a heating element.

Preferably, the constant electric current converting unit includes a voltage stabilizer, a first resistor, a first capacitor and a second capacitor.

The voltage stabilizer includes a voltage input end, a voltage output end and a common connecting end. The voltage input end of the voltage stabilizer is electrically connected with the power supply. The voltage output end of the voltage stabilizer is electrically connected with one end of the first resistor. The other end of the first resistor is electrically connected with the common connecting end of the voltage stabilizer.

One end of the first capacitor is electrically connected with the voltage input end of the voltage stabilizer. The other end of the first capacitor is electrically connected with the common connecting end of the voltage stabilizer. One end of the second capacitor is electrically connected with the voltage output end of the voltage stabilizer. The other end of the second capacitor is electrically connected with the common connecting end of the voltage stabilizer.

Preferably, the voltage test unit includes an amplifier. The amplifier includes a controlled end, a voltage test end and a signal output end.

The controlled end of the amplifier is electrically connected with the controller. The voltage test end of the amplifier is electrically connected with the at least a heating element. The signal output end of the amplifier is electrically connected with the controller.

Preferably, the power energy adjusting module includes the following.

A a boost unit is used to increase electric voltages from the power supply supplied to the at least a heating element when the measured voltage value of two ends of the least a heating element is less than a range of the preset voltage threshold value.

A buck unit is used to lower electric voltages from the power supply supplied to the at least a heating element when the measured voltage value of two ends of the least a heating element is higher than a range of the preset voltage threshold value.

The above electric heating smoking system adopts a way that a hardware module for test and measuring and a hardware module for power energy supplying and adjusting are disposed to alternatively work according to a certain frequency. On the one hand, a hardware structure of the electric heating smoking system is greatly simplified. On the other hand, mutual interference between these hardware modules is eliminated and reduced.

### BRIEF DESCRIPTION OF THE DRAWINGS

One or more embodiments in accordance with the present invention are illustratively exemplified for explanation through figures shown in the corresponding attached drawings. These exemplified descriptions do not constitute any limitation on the embodiments. The elements with the same reference numerals in the attached drawings are denoted as similar elements. Unless otherwise stated, the figures in the attached drawings do not constitute any scale limitation.
FIG. 1 shows a schematic cross sectional view of an electric heating smoking system in accordance with a preferred embodiment of the present invention.
FIG. 2 shows a schematic curve line diagram showing variation of voltages in view of temperature changes for a heating element made from a nickel chromium alloy in a condition of adopting a constant value of electric currents of 4A in accordance with the present invention.
FIG. 3 shows a schematic flow chart of a release control method for volatile compounds in an electric heating smoking system in accordance with a preferred embodiment of the present invention.
FIG. 4 shows a schematic block diagram of a release control device for volatile compounds of an electric heating smoking system in accordance with a preferred embodiment of the present invention.
FIG. 5 shows a schematic block diagram of a constant electric current test module shown in FIG. 4 in accordance with the present invention.
FIG. 6 shows a schematic circuit diagram of the release control device for volatile compounds of an electric heating smoking system shown in FIG. 4 in accordance with the present invention.
FIG. 7 shows a schematic circuit block diagram of a release control device for volatile compounds of an electric heating smoking system in accordance with another preferred embodiment of the present invention.

### DETAILED DESCRIPTION OF PREFERRED EMBODIMENT

In order to facilitate best understanding of the present invention, the present invention will be illustrated in more detail below in conjunction with the attached drawings and preferred embodiments.

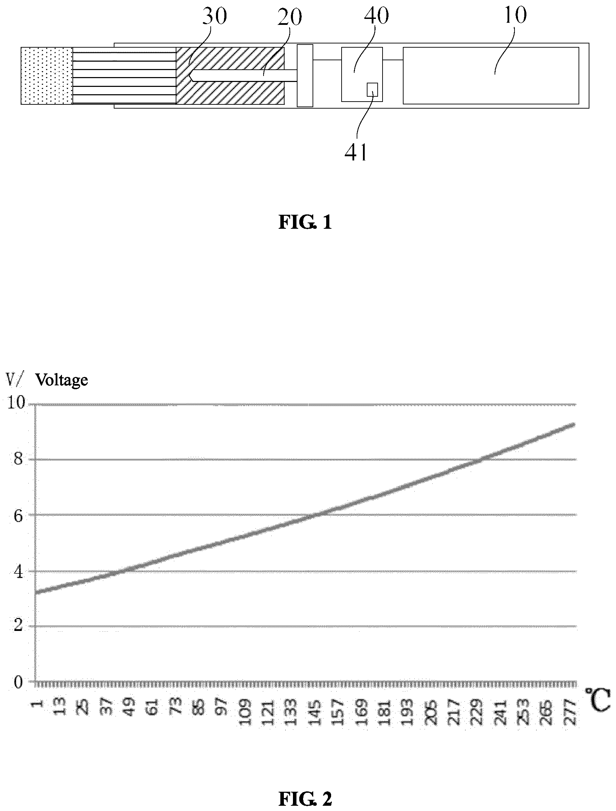

A release control method for volatile compounds in an electric heating smoking system in accordance with the present invention is provided. A system structure of the electric heating smoking system used as a base to perform the release control method for volatile compounds in accordance with a preferred embodiment of the present invention is shown in FIG. 1. The electric heating smoking system includes a power device 10, at least a heating element 20 electrically connected with the power device 10 and an aerosol generating substrate 30. The at least a heating element 20 is used to heat the aerosol generating substrate 30 to release a plurality of volatile compounds, and the plurality of volatile compounds are formed simply via heating treatment. Each volatile compound of the plurality of volatile compounds has a lowest release temperature. The each volatile compound is released when its current temperature is above the lowest release temperature. For convenient use of products in accordance with the present invention, the electric heating smoking system further includes a controller 40 to control electric energy of the power device 10 output to the heating element 20.

According to the release control method in accordance with the present invention, the release control method includes a step of selecting a voltage threshold value under a preset value of electric currents. Under the preset value of electric currents, the selected operating voltage can be used to ensure an operating temperature of the heating element 20 is lower than a lowest release temperature of at least a volatile compound out of the plurality of volatile compounds to avoid release of the at least a volatile compound from the aerosol generating substrate 30. Meanwhile, the operating temperature of the heating element 20 is within a much proper range to prevent the aerosol generating substrate 30 from becoming mush-like under certain excess high temperatures, and from unsteady volatility of the plurality of volatile compounds, etc.

Selection of the voltage threshold value under the preset value of electric currents in accordance with the present invention is based on the operating voltage of the heating element 20 under the preset value of electric currents being able to embody the operating temperature of the heating element 20. In practice, when the heating element 20 works, a voltage value between two ends of the heating element 20 is calculated as the follows: V = R×I. R represents an actual resistance of the heating element 20, and I represents the known preset value of electric currents. Hence, the voltage value between the two ends of the heating element 20 under the preset value of electric currents is determined by the actual resistance R of the heating element 20. The actual resistance R is determined by a self material, a shape structure and a real-time temperature of the heating element 20, and is expressed by the following relational formula: R=ρ(T)×L/S, and ρ(T)=ρ₀×(1+α₁T+α₂T²). For the heating element 20 already made based on a particular structure and shape, a length L and a sectional area S of the heating element 20 are constant and can be measured. The reference resistivity po is constant. p(T) can be calculated based on the reference resistivity po and polynomial coefficients α₁ and α₂ relevant to the temperature T. Hence, a relational formula showing a relationship between the voltage value V between the two ends of the heating element 20 and the temperature T under the preset value of electric currents I can be derived as follows.

V=ρ₀×(1+α₁T+α₂T²)×L×I/S. Variables in the above relational formula are only the voltage value V and the temperature T. The above relational formula can be derived based on tests on a selected heating element 20. For example, FIG. 2 illustrates and exemplifies a relationship curve between voltages and temperatures of the heating element 20 made from a nickel chromium alloy with a resistance value of 0.8 ohm under a normal/room temperature in a condition of adopting a constant value of electric currents of 4A.

Furthermore, in order to control release of the plurality of volatile compounds from the aerosol generating substrate 30 when the aerosol generating substrate 30 is heated, the above voltage threshold value is calculated in a condition that the selected operating temperature of the heating element 20 is under a highest operating temperature of the heating element 20. The highest operating temperature of the heating element 20 is lower than the lowest release temperature of the at least a volatile compound out of the plurality of volatile compounds to avoid release of the at least a volatile compound from the aerosol generating substrate 30. Meanwhile, it is required to explain that, for the aerosol generating substrates 30 with different brands or with different substrate contents, the highest operating temperature of the selected heating element 20 to be selected may be different since the aerosol generating substrates 30 with different brands or with different contents may contain different ingredients of the plurality of volatile compounds. As a result, the preset voltage threshold value of the selected heating element 20 can be correspondingly calculated based on different highest operating temperatures in different occasions.

Of course, in order to establish the above relevant relationship more precisely, the heating element 20 is made from material having a strong relevance between resistances and temperatures, such as nickel chromium alloy, ferro nickel alloy or ferro chromium alloy.

The actual operating temperature of the heating element 20 derived from the voltage between the two ends of the heating element 20 due to the above strong relevance when the heating element 20 works under a constant value of electric currents has much higher accuracy and stability.

Furthermore, the heating element 20 of the electric heating smoking system as shown in FIG. 1 is designed to adopt a style of a heating needle/heating rod penetrating a center of the aerosol generating substrates 30. The heating element 20 is preferably made from material having strong relevance between electric resistances and temperatures. In other embodiments, the heating element 20 is formed by depositing the above mentioned material on a rigid carrier material, such as a heating element 20 made from a ceramic substrate wrapped by nickel. Alternatively, in other embodiments, a tubular heating part having a lengthwise receiving cavity therein and made from the above mentioned material is also suitable for manufacture of the heating element 20.

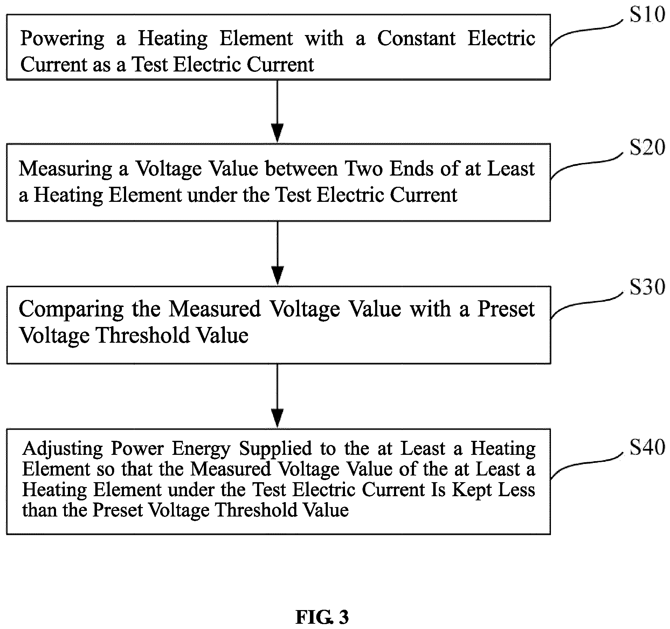

The release control method in accordance with the present invention further includes the following steps. First of all, the power device 10 is controlled to provide electric energy to the at least a heating element 20 and to make the at least a heating element 20 generate heat. The aerosol generating substrate 30 is heated by the generated heat while the at least a volatile compound out of the plurality of harmful volatile compounds from the aerosol generating substrate 30 is avoided to be released. Controlling steps of the release control method are shown in FIG. 3 as follows.

In a step of S 10, powering the at least a heating element 20 with a test electric current is performed. The test electric current is constant with a value of the test electric current being the preset value of electric currents.

In a step of S20, measuring a voltage value between the two ends of the at least a heating element 20 under the test electric current is performed.

In a step of S30, comparing the measured voltage value with a preset voltage threshold value is performed.

In a step of S40, adjusting power energy supplied to the at least a heating element 20 so that the measured voltage value of the at least a heating element 20 under the test electric current is kept less than the preset voltage threshold value is performed.

When the heating element 20 in accordance with the present invention as described above works, a constant electric current is used as the test electric current. The test electric current is then supplied to the heating element 20 to test and measure the voltage value between the two ends of the heating element 20. Afterwards, the measured real-time voltage value between the two ends of the heating element 20 under the constant electric current is compared with the preset voltage threshold value. Finally, the real-time voltage value is kept being less than the preset voltage threshold value via controlling a power energy supply to the heating element 20. Based on the above descriptions regarding the preset voltage threshold value, the preset voltage threshold value is related to a situation that the heating element 20 is ensured to stay in a required working status. Hence, via adjusting the power energy supply to the at least a heating element 20, the voltage value of the at least a heating element under the test electric current is kept within a range of the preset voltage threshold value in order to achieve a good control on the working status of the heating element 20. Meanwhile, in view of the above steps of the control method and an inner mechanism of the system, an entire process of control and test is completely not related to test and conversion calculation of temperatures. Instead, only voltage values under the constant electric current are tested, and power energy output to the heating element 20 is correspondingly adjusted in order to keep the test voltage values within the range of the preset voltage threshold value. As a result, a good control on a working status of the electric heating smoking system can be therefore achieved.

It is required to be explained that the preset voltage threshold value for the heating element 20 determined in advance is an exact single number value in most situations based on control requirements on the working status of the heating element 20 in order to achieve a better precise control on the working status of the heating element 20. However, in more embodiments, a certain tolerance or fluctuation is allowed during the process of control. As a result, the preset voltage threshold value can be extended and substituted by an interval range lower than the preset voltage threshold value.

Of course, the preset voltage threshold value as above mentioned is selected based on an originally setup known value of electric currents. The constant electric current used in the test process should be same as the originally setup known value of electric currents used for selection of the preset voltage threshold value. Hence, in the step of S10, a value of electric currents of the test electric current is set as the preset value of electric currents as above used for selecting the preset voltage threshold value.

Furthermore, in order to proceed the above mentioned method smoothly, the electric heating smoking system in accordance with a preferred embodiment of the present invention as shown in FIG. 1 can be designed to add a constant electric current module 41 in a hardware part of the controller 40. The constant electric current module 41 is used to convert an output electric voltage of the power device 10 to the constant electric current for supplying to the heating element 20 during proceeding of the test steps of S10∼S20. In practice, when a load amount and a resistance value of a circuitry structure in the electric heating smoking system are controllable, the constant electric current module 41 can be further integrated onto the power device 10. As a result, the power device 10 becomes a constant electric current power source to proceed, and the output electric current from the power device 10 to the heating element 20 can be kept as a constant electric current.

Alternatively, in another preferred embodiment of the present invention, the electric heating smoking system further includes other hardware structures for purposes such as control and sensing, etc., which are electrically connected with the heating element 20 in serial or in parallel. Hence, in a preferred embodiment, the constant electric current module 41 can be a constant current regulator (CCR) usually based on an optimization choice of electronic hardware structures. The test electric current is output via the CCR during the control process to ensure that the output electric current is always constant.

Furthermore, in the step of S40, via adjusting the power energy supply to the heating element 20, the voltage value between the two ends of the heating element 20 is changed under the test electric current. There are two ways as follows to adjust the power energy supply.

In a way of adjusting, a duty ratio of the power energy supply is adjusted. When the measured voltage value between the two ends of the heating element 20 is lower than the range of the preset voltage threshold value, the duty ratio of the power energy supply is increased. On the contrary, when the measured voltage value between the two ends of the heating element 20 is higher than the range of the preset voltage threshold value, the duty ratio of the power energy supply is decreased. In practice, adjustment of the duty ratio can be controlled as follows. When the measured voltage value is higher than the preset voltage threshold value, the power energy supply of the power device 10 to the at least a heating element 20 is cut off. When the measured voltage value is lower than or equal to the preset voltage threshold value, the power energy supply of the power device 10 to the at least a heating element 20 is continued.

In another way of adjusting, an electric voltage of the power energy supply is adjusted. When the measured voltage value between the two ends of the heating element 20 is lower than the range of the preset voltage threshold value, the supplied electric voltage between the two ends of the heating element 20 is increased by ways of using a boost circuit, etc. When the measured voltage value between the two ends of the heating element 20 is higher than the range of the preset voltage threshold value, the supplied electric voltage between the two ends of the heating element 20 is decreased by ways of using a buck circuit, etc.

According to precise control of the heating element 20 during an interval of inhaling and exhaling, the control steps of S10∼S20 as above is performed in a frequency of 100-1000 Hz during the interval of inhaling and exhaling by users.

According to the same inventive idea in accordance with the present invention as the above, another control method in other embodiments in accordance with the present invention includes the following steps.

In a step of S10a, maintaining a working electric current of the heating element 20 as a constant electric current is performed.

In a step of S20a, measuring a working voltage value between the two ends of the at least a heating element 20 is performed.

In a step of S30a, comparing the measured voltage value with a range of a preset voltage threshold value is performed.

In a step of S40a, adjusting power energy supplied to the at least a heating element 20 so that the measured voltage value of the at least a heating element 20 under the test electric current is kept less than the range of the preset voltage threshold value is performed.

In the above varied embodiment, during a process that users inhale and exhale electronic cigarettes in comparison with the above previous embodiment, the heating element 20 is maintained to work under the constant electric current. In a control process of the varied embodiment, a step to switch circuits for supplying the test electric current is not required, and the working voltage value under the working electric current is directly measured for comparing and controlling purposes. In practice, output electric currents of the power device 10 are output after being converted by the constant electric current module 41 to a constant electric current. As a result, the whole control process can be much convenient. Meanwhile, a test and control process in the control process of the above varied embodiment is executed in the frequency of 100-1000 Hz in the same way as the previous embodiment.

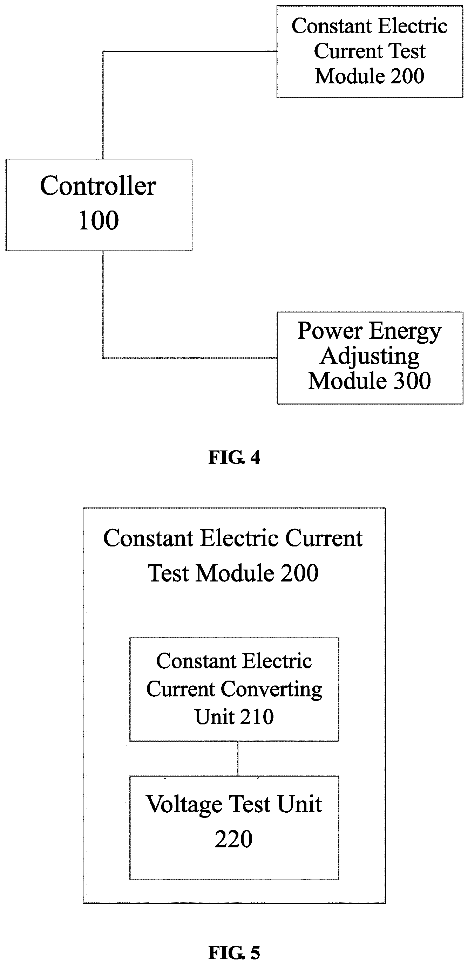

Based on the above content of the release control method for volatile compounds in the electric heating smoking system in accordance with the present invention, an electric heating smoking system performing the above method in accordance with the present invention is further provided. In a preferred embodiment, a structure thereof as shown in FIG. 4 includes a controller 100, a constant electric current test module 200 and a power energy adjusting module 300 both of which are electrically connected with the controller 100.

The constant electric current test module 200 is used to convert output voltages of the power device 10 to a constant electric current which is subsequently output to the heating element 20. The constant electric current test module 200 is also used to measure the working voltage value between the two ends of the heating element 20.

The power energy adjusting module 300 is used to adjust power energy output to the heating element 20.

The controller 100 is used to compare and calculate the working voltage value between the two ends of the heating element 20 measured by the constant electric current test module 200 with the range of the preset voltage threshold value. The controller 100 then controls the power energy adjusting module 300 to adjust power energy output to the heating element 20 based on a calculated result as above.

Based on realization of the above functions, a detailed circuit structure of the constant electric current test module 200 and the power energy adjusting module 300 is shown as referring to FIGS. 5-6. The constant electric current test module 200 includes a constant electric current converting unit 210 and a voltage test unit 220.

The constant electric current converting unit 210 includes a voltage stabilizer U1 and a first resistor R1. The voltage stabilizer U1 includes an input end, an output end and a common connecting end. The input end of the voltage stabilizer U1 is electrically connected with the power device 10. The output end of the voltage stabilizer U1 is electrically connected with one end of the first resistor R1. The common connecting end of the voltage stabilizer U1 is electrically connected with the other end of the first resistor R1. Functionally, output power from the power device 10 is adjusted by the voltage stabilizer U1 to have a constant electric voltage, and then is converted to a constant electric current by the first resistor R1 in order to output to the heating element 20.

Furthermore, the constant electric current converting unit 210 further includes a first capacitor C1 and a second capacitor C2 in order to enhance performance of electric current stability and effects of precision of the constant electric current converting unit 210.

One end of the first capacitor C1 is electrically connected with the input end of the voltage stabilizer U1. The other end of the first capacitor C1 is electrically connected with the common connecting end of the voltage stabilizer U1. As a result, electric voltages input from the power device 10 are electrically filtered by the first capacitor C1. One end of the second capacitor C2 is electrically connected with the output end of the voltage stabilizer U1. The other end of the second capacitor C2 is electrically connected with the common connecting end of the voltage stabilizer U1. As a result, constant electric currents output from the voltage stabilizer U1 are electrically filtered by the second capacitor C2.

The voltage test unit 220 mainly includes an amplifier U2. The amplifier U2 includes a controlled end, a test end and an output end. The test end of the amplifier U2 is electrically connected with the heating element 20. The output end of the amplifier U2 is electrically connected with the controller 100 via a second resistor R2 in order to return acquired voltage values of the heating element 20 back to the controller 100 for comparison and calculation. The controlled end of the amplifier U2 is electrically connected with a control pin of the controller 100 via a first triode Q1 so that the controller 100 can control switching-on or switching-off of the first triode Q1 in order to control work of the entire voltage test unit 220.

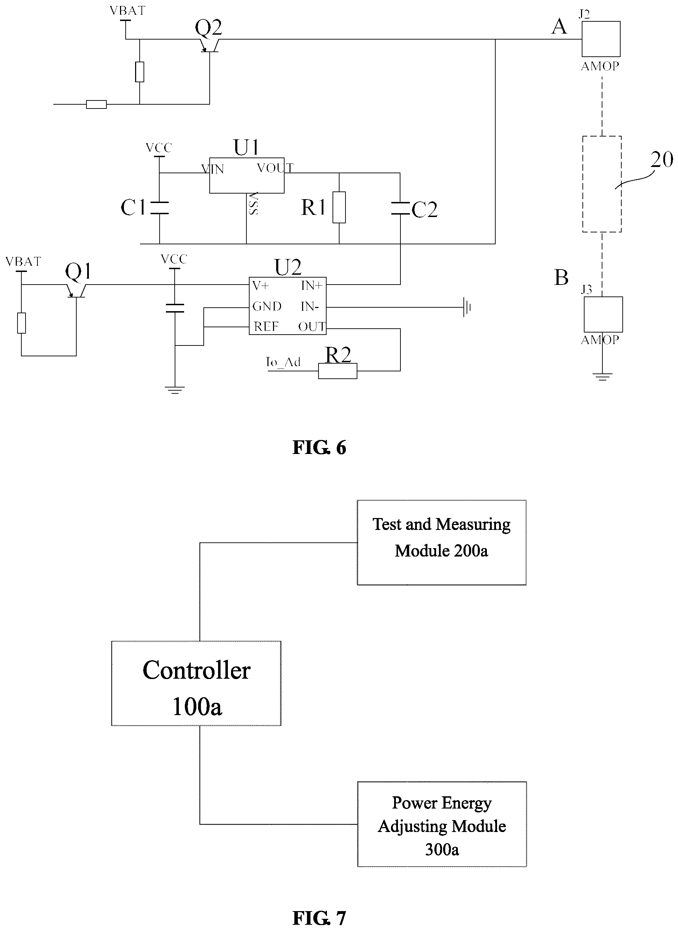

The power energy adjusting module 300 is shown as referring to FIG. 6, and includes a second triode Q2. The second triode Q2 is used as a switch, and is electrically connected in the following way. An emitter of the second triode Q2 is electrically connected with the power device 10. A base of the second triode Q2 is electrically connected with a control pin of the controller 100. A collector of the second triode Q2 is electrically connected with the heating element 20. The controller 100 controls switching-on or switching-off of the second triode Q2 in order to control power energy output to the heating element 20.

Based on the above descriptions regarding respective parts of the electric heating smoking system, a whole functional principle of the electric heating smoking system is provided as follows. The second triode Q2 controlled by the controller 100 is used as a control switch for the power device 10 outputting power energy to the heating element 20. The voltage stabilizer U1, the first resistor R1 and the amplifier U2 constitute the constant electric current test module 200. The first triode Q1 is used as a power supply switch for the constant electric current test module 200.

When devices of the electric heating smoking system work, a control procedure of the electric heating smoking system is mainly based on two working processes including a test mode and an output mode. The processing method includes the following steps.

In a step of S1, the controller 100 switches off the second triode Q2, and switches on the first triode Q1 in order to start the constant electric current test module 200 for testing and measuring a voltage value between two ends A, B of the heating element 20.

In a step of S2, the controller 100 acquires the voltage value returned back from the output end of the amplifier U2, and compares the returned voltage value with the range of the preset voltage threshold value. If the returned voltage value is less than the range of the preset voltage threshold value, the controller 100 outputs a high level voltage signal in order to switch the second triode Q2 to an electrical conducting status thereof. As a result, the main power device 10 is able to output and supply power to the heating element 20 for raising a heating temperature of the heating element 20, and the controller 100 switches off the first triode Q1 at the same time. If the returned voltage value is higher than the range of the preset voltage threshold value, the controller 100 outputs a lower level voltage signal in order to switch off the second triode Q2, and continuously controls the constant electric current test module 200 to test and measure the voltage value between the two ends A, B of the heating element 20 until the measured voltage value is less than the range of the preset voltage threshold value.

Meanwhile, according to a design of the above circuit structure in accordance with the present invention, a test and measuring process and an output power energy adjusting process of the electric heating smoking system are repeatedly executed via the controller 100 during different time intervals, rather than being executed simultaneously. In other words, a process that the constant electric current test module 200 to make the power device 10 output the test electric current and a process that the power energy adjusting module 300 works to adjust output power energy of the power device 10 to the heating element 20 are alternatively proceeded, rather than being proceeded simultaneously. Besides, according to the above method, a frequency of test and measuring or alternative executing of test/measuring and adjusting is preferably adopted as 100~1000Hz. Hence, on one hand, a hardware structure of the electric heating smoking system can be promoted to be simplified. On the other hand, interference between the two related functional modules, the constant electric current test module 200 and the power energy adjusting module 300, can be avoided when the two related functional modules work simultaneously.

In the above preferred embodiment of the present invention, a constant current regulator (CCR) is preferably used as the constant electric current converting unit 210 in order to output a constant electric current to the heating element 20. In other embodiments of the present invention, an output of a constant electric current for the power device 10 can be adopted when loads in the entire circuit structure of the electric heating smoking system can be precisely controlled. As a result, the constant electric current converting unit 210 can be omitted or simplified in the circuit structure of the electric heating smoking system.

Of course, for those of ordinary skill in the art, the first triode Q1 and the second triode Q2 can be simply substituted by a negative channel metal oxide semiconductor (N-MOS) tube in practice based on switch-on and switch-off functions of the first triode Q1 and the second triode Q2 as described above.

Based on the above practicing method, switch-on and switch-off of the second triode Q2 is the most simplified way for the power energy adjusting module 300. A time for a power supply to output power to the heating element 20 can be adjusted via switch-on or switch-off of the second triode Q2. When the measured voltage value is higher than the preset voltage threshold value, the second triode Q2 is switched off to lower power energy from the power device 10 output to the heating element 20. When the measured voltage value is less than the preset voltage threshold value, the second triode Q2 is switched to its electrical conducting status to increase power energy from the power device 10 output to the heating element 20 so that the measured voltage value of the heating element 20 is maintained at the preset voltage threshold value in order to control a temperature of the heating element 20. In other much precise methods, the power energy adjusting module 300 can include a boost converter and a buck converter, electric voltages of powers supplied to the heating element 20 are further raised and lowered under a constant electric current. Physically, when the measured working voltage is higher than the preset voltage threshold value, the buck converter is used to lower electric voltages from the power device 10 supply to the heating element 20, and therefore to lower the temperature of the heating element 20. When the measured working voltage is less than the preset voltage threshold value, the boost converter is used to increase electric voltages from the power device 10 supply to the heating element 20, and to increase the temperature of the heating element 20. As a result, a heating power of the heating element 20 can be changed, and an actual operating temperature of the heating element 20 can be adjusted to satisfy and be within a preset temperature threshold. Meanwhile, the above boost converter and buck converter can be replaced by a circuit module or software module having the same functions.

Based on a hardware design of the electric heating smoking system, another control method in accordance with embodiments of the present invention on a basis of an inventive idea that a test process on the heating element 20 and a control process of adjusting power energy are alternatively executed includes the following steps.

In a step of S10b, the power device 10 for control supplies a test electric current to the heating element 20 in a first time interval. The test electric current is a constant electric current, and a value of the constant electric current is the above preset value of electric currents. A voltage value between the two ends of the at least a heating element 20 is then measured under the test electric current. Meanwhile, the measured voltage value is compared with the preset voltage threshold value.

In a step of S20b, power energy from the power device 10 supplied to the at least a heating element 20 is adjusted in a second time interval. As a result, a voltage value of the at least a heating element 20 under the test electric current is maintained at the preset voltage threshold value.

Furthermore, the step of S10b that the power device 10 supplies the test electric current to the heating element 20 and the step of S20b that power energy is output to the heating element 20 are alternatively executed.

Meanwhile, by the above alternatively executing method, another control method in accordance with embodiments of the present invention includes the following steps.

In a step of S10c, a working electric current of the heating element 20 is maintained as a constant electric current.

In a step of S20c, a working voltage value between the two ends of the at least a heating element 20 is measured in a first time interval, and the measured voltage value is compared with the range of the preset voltage threshold value.

In a step of S30c, electric voltages from the power device 10 supplied to the at least a heating element 20 is adjusted in a second time interval so that a working voltage of the at least a heating element 20 is maintained at the preset voltage threshold value.

A test and measuring process of the step of S20c in the first time interval and a process of adjusting power energy of the step of 30c in the second time interval are alternatively executed based on the above described frequency.

Based on more test modules for testing a working status overall in the heating element 20 and adjustment of power supply energy in the above hardware structure of the electric heating smoking system, another electric heating smoking system in accordance with embodiments of the present invention is further provided in use of the above way of alternatively executing two processes based on a certain frequency. Referring to FIG. 7, a hardware structure of the another electric heating smoking system is different from the above embodiments in view of the following which is included by the another electric heating smoking system.

A test and measuring module 200a is used to measure a working status of the heating element 20.

A power energy adjusting module 300a is used to adjust power energy of a power supply supplied to the heating element 20.

A controller 100a is used to control the test and measuring module 200a for measuring the working status of the heating element 20, and to control the power energy adjusting module 300a for adjusting power energy of the power supply supplied to the heating element 20 according to the measured working status.

Of course, based on the above descriptions regarding embodiments of the present invention and conventional hardware connective methods, the test and measuring module 200a includes a power input end, a voltage testing end, a controlled end and a signal output end. The power input end of the test and measuring module 200a is electrically connected with the power supply. The voltage testing end of the test and measuring module 200a is electrically connected with the heating element 20. The controlled end and the signal output end of the test and measuring module 200a are electrically connected with the controller 100a.

The power energy adjusting module 300a also includes a power energy input end, a power energy output end and a controlled end. The power energy input end of the power energy adjusting module 300a is electrically connected with the power supply. The power energy output end of the power energy adjusting module 300a is electrically connected with the heating element 20. The controlled end of the power energy adjusting module 300a is electrically connected with the controller 100a.

The test and measuring module 200a and the power energy adjusting module 300a respectively execute their own functions under control of the controller 100a, and are disposed to alternatively work according to a certain frequency.

Besides, in more extensive embodiments in accordance with the present invention regarding voltage testing and measuring as above, the work status of the heating element 20 measured by the test and measuring module 200a includes at least one kind of a working voltage value, a working value of electric currents, a real-time resistance value, a real-time coefficient of resistivity or an operative temperature.

By adopting the same method in the same way, the test and measuring module 200a and the power energy adjusting module 300a are designed to respectively use the same switches as the first triode Q1 and the second triode Q2. The first triode Q1 and the second triode Q2 are then alternatively electrically connected according to a certain frequency. As a result, a purpose that both of the test and measuring module 200a and the power energy adjusting module 300a are disposed to alternatively work according to the certain frequency can be achieved. On the one hand, a hardware structure of the electric heating smoking system is promoted to be simplified. On the other hand, mutual interference between these related functional modules when they execute simultaneously is avoided.

On the basis of the above embodiments of the present invention, an electric heating smoking system in accordance with the present invention is further provided. Meanwhile, in combination with a usual content of products, the aerosol generating substrate 30 is preferably adopted to be tobacco-contained material which is heated to release volatile compounds from a substrate of the aerosol generating substrate 30. Alternatively, nontobacco material suitable for the electric heating smoking system after being heated can be adopted. Solid substrates are preferably adopted for the aerosol generating substrate 30. The solid substrates can include one kind or a plurality of kinds of vanilla leaves, tobacco leaves, homogeneous tobacco and expanded tobacco in form of one kind or a plurality of kinds of powders, grains, fragmental strips, strips or slices. Alternatively, the solid substrates can include volatile fragrance compounds attached to tobacco or nontobacco material in order to be released when the substrates are heated.

Alternatively, in other embodiments, the aerosol generating substrate 30 can also be liquid substrates. The liquid substrates are stored in a storage cavity, and are absorbed into a porous material. The porous material can be any material suitable for absorbing the liquid substrates, such as foam metal, porous ceramic, fiber cotton, fiberglass, polypropylene, etc. The liquid substrates can be reserved in the porous material before use. As a preferred embodiment, when the liquid substrates are adopted, the electric heating smoking system can further include an atomizer including at least a heating element suitable for tobacco liquid substrates. The atomizer includes a liquid storage cavity for accommodating the liquid substrates, and atomizing components used to absorb the liquid substrates for heating and atomizing.

Meanwhile, a number of the at least a heating element 20 of the electric heating smoking system can be adaptatively varied according to requirements such as a length of a cigarette, an amount of smoking, etc. Besides, the at least a heating element 20 is properly disposed in order to effectively heat the aerosol generating substrate 30 for forming good release of volatile compounds. In FIG. 1, the heating element 20 is directly inserted into the aerosol generating substrate 30 for heating. In other varying methods, the aerosol generating substrate 30 is heated by heat conduction. Physically, the heating element 20 is at least partially contacted with the aerosol generating substrate 30, or the heating element 20 is a carrier on which the aerosol generating substrate 30 is deposited. As a backup method, a thermal conductor can be used to transmit heat from the heating element 20 to the aerosol generating substrate 30.

It should be noted that the specification of the present invention and its accompanying drawings provides preferred embodiments of the present invention. However, the present invention can be implemented in many different forms and is not limited to the preferred embodiments described in this specification. Furthermore, for those of ordinary skill in the art, improvements or transformations can be made based on the above descriptions, and all these improvements and transformations should belong to the protection scope of the appended claims of the present invention.

## Claims

1. A release control method for volatile compounds in an electric heating smoking system, wherein the electric heating smoking system comprises a power supply, at least a heating element electrically connected with the power supply and used for heating an aerosol generating substrate, the aerosol generating substrate is heated to release a plurality of volatile compounds; the method comprising:
controlling power energy from the power supply supplied to the at least a heating element to avoid at least a volatile compound out of the plurality of volatile compounds being released from the aerosol generating substrate; the controlling steps comprising:
powering the at least a heating element with a constant test electric current;
measuring a voltage value of the at least a heating element under the test electric current;
comparing the measured voltage value with a preset voltage threshold value; and
adjusting power energy supplied to the at least a heating element so that the measured voltage value of the at least a heating element under the test electric current is kept less than the preset voltage threshold value.

2. The release control method for volatile compounds in an electric heating smoking system as claimed in Claim 1, wherein before the step of controlling power energy from the power supply supplied to the at least a heating element to avoid at least a volatile compound out of the plurality of volatile compounds being released from the aerosol generating substrate, the method further comprises:
predetermining a corresponding voltage threshold value when the at least a heating element works under of a value of the test electric current.

3. The release control method for volatile compounds in an electric heating smoking system as claimed in Claim 2, wherein the step of predetermining a corresponding voltage threshold value when the at least a heating element works under of a value of the test electric current comprises:
calculating a resistance value of the at least a heating element corresponding to a preset highest operating temperature value of the at least a heating element based on the preset highest operating temperature value, wherein the preset highest operating temperature value of the at least a heating element is lower than a lowest release temperature of the at least a volatile compound out of the plurality of volatile compounds;
calculating the corresponding voltage threshold value under the value of the test electric current according to the resistance value of the at least a heating element corresponding to the preset highest operating temperature value of the at least a heating element and the value of the test electric current.

4. The release control method for volatile compounds in an electric heating smoking system as claimed in any of Claims 1 to 3, wherein the step of adjusting power energy supplied to the at least a heating element so that the measured voltage value of the at least a heating element under the test electric current is kept less than the preset voltage threshold value comprises:
adjusting a duty ratio of the power energy supplied to the at least a heating element so that the measured voltage value of the at least a heating element under the test electric current is lower than the preset voltage threshold value.

5. The release control method for volatile compounds in an electric heating smoking system as claimed in Claim 4, further comprising controlling the power supply to cut off power energy of the power supply supplied to the at least a heating element when the measured voltage value is higher than the preset voltage threshold value, and controlling the power supply to maintain supplying power energy of the power supply to the at least a heating element when the measured voltage value is lower than or equal to the preset voltage threshold value.

6. The release control method for volatile compounds in an electric heating smoking system as claimed in any of Claims 1 to 3, wherein the step of adjusting power energy supplied to the at least a heating element so that the measured voltage value of the at least a heating element under the test electric current is kept less than the preset voltage threshold value comprises:
adjusting an electric voltage value of power energy of the power supply supplied to the at least a heating element so that the measured voltage value of the at least a heating element under the test electric current is kept within a range less than the preset voltage threshold value.

7. The release control method for volatile compounds in an electric heating smoking system as claimed in Claim 6, further comprising a step of adjusting an electric voltage value of power energy of the power supply supplied to the at least a heating element so that the measured voltage value of the at least a heating element under the test electric current is kept within a range less than the preset voltage threshold value, wherein the step of adjusting further comprises:
decreasing an electric voltage of the power energy supplied to the at least a heating element when the measured voltage value is higher than a highest limit of the range;
increasing an electric voltage of the power energy supplied to the at least a heating element when the measured voltage value is lower than a lowest limit of the range.

8. The release control method for volatile compounds in an electric heating smoking system as claimed in any of Claims 1 to 4, further comprising a step of controlling the power supply to supply intermittently a constant test electric current to the at least a heating element, and measuring a voltage value of the at least a heating element under the constant test electric current, wherein the step of controlling is executed based on a frequency of 100-1000 Hz.

9. A release control method for volatile compounds in an electric heating smoking system, wherein the electric heating smoking system comprises a power supply, at least a heating element electrically connected with the power supply and used for heating an aerosol generating substrate, the aerosol generating substrate is heated to release a plurality of volatile compounds; the method comprising:
maintaining a working electric current of the at least a heating element as a constant electric current;
controlling an electric voltage of the power supply supplied to the at least a heating element in order to present at least a volatile compound out of the plurality of volatile compounds from being released from the aerosol generating substrate; wherein the step of controlling further comprises:
measuring a working voltage value of the at least a heating element;
comparing the measured working voltage value with a preset voltage threshold value; and
adjusting the electric voltage supplied to the at least a heating element so that the measured working voltage value of the at least a heating element is kept less than the preset voltage threshold value.

10. A release control method for volatile compounds in an electric heating smoking system, wherein the electric heating smoking system comprises a power supply, at least a heating element electrically connected with the power supply and used for heating an aerosol generating substrate, the aerosol generating substrate is heated to release a plurality of volatile compounds; the method comprising:
controlling a power energy of the power supply supplied to the at least a heating element in order to present at least a volatile compound out of the plurality of volatile compounds from being released from the aerosol generating substrate; wherein the step of controlling comprises:
controlling the power supply to supply a constant electric current to the at least a heating element, measuring a voltage value of the at least a heating element under the constant electric current, and comparing the measured voltage value with a preset voltage threshold value in a first time interval; and
adjusting power energy of the power supply output to the at least a heating element in a second time interval so that the measured voltage value of the at least a heating element under the constant electric current is maintained as being less than the preset voltage threshold value;
wherein the step of controlling executed in the first time interval and the step of adjusting executed in the second time interval are alternatively executed base on a preset frequency.

11. An electric heating smoking system, wherein the electric heating smoking system comprises a power supply, at least a heating element electrically connected with the power supply and used for heating an aerosol generating substrate, the aerosol generating substrate is heated to release a plurality of volatile compounds; the system further comprising:
a constant electric current test module used to output a constant electric current to the at least a heating element, and to measure a voltage value between two ends of the at least a heating element under the constant electric current;
a power energy adjusting module used to adjust power energy of the power supply output to the at least a heating element; and
a controller used to compare the measured voltage value with the preset voltage threshold value, and to control the power energy adjusting module to adjust the power energy of the power supply output to the at least a heating element based on a compared result so that the measured voltage value of the at least a heating element under the constant electric current is maintained as being less than the preset voltage threshold value.
